# EUROPÄISCHE PATENTSCHRIFT

(11) **EP 1 391 356 B1**
(45) Veröffentlichungstag und Bekanntmachung des Hinweises auf die Patenterteilung: **03.12.2008**
(21) Anmeldenummer: 03017885.9
(22) Anmeldetag: 05.08.2003
(51) Int. Cl.: B60R 22/00

(54) **Rückhaltesystem für eine mobile Arbeitsmaschine**
Restraint system for a mobile working machine
Système de retenue pour machine de travail mobile

(30) Priorität: 08.08.2002 DE 10236447
(43) Veröffentlichungstag der Anmeldung: 25.02.2004
(73) Patentinhaber: STILL GMBH, 22113 Hamburg (DE)
(72) Erfinder: Arand, Patrick, 22397 Hamburg (DE)
(74) Vertreter: Geirhos, Johann

(56) Entgegenhaltungen:
- DE-A- 19 717 622
- US-A- 4 124 224
- US-A- 4 416 468
- US-A- 4 416 469

## Beschreibung

Die Erfindung betrifft ein Rückhaltesystem für eine mobile Arbeitsmaschine, insbesondere ein Flurförderzeug, mit einem Fahrersitz und einem Rückhaltegurt.

Die US 44 16 465 offenbart ein Rückhaltesystem der dem Oberbegriff des Anspruchs 1 entspricht.

Eine der häufigsten und gefährlichsten Unfallarten beim Betrieb einer mobilen Arbeitsmaschine mit sitzendem Bediener ist das Umkippen der Maschine, weil dabei der ungesicherte Bediener aus der Fahrerkabine fallen und unter die Arbeitsmaschine geraten kann. Um das Herausfallen des Fahrers zu verhindern, sind verschiedene Rückhaltesysteme gebräuchlich. Die weiteste Verbreitung haben dabei Gurtsysteme, insbesondere Beckengurte. Besonders bei häufigen Ein- und Aussteigevorgängen wird das Anlegen des Sicherheitsgurtes vom Bediener jedoch als lästig empfunden. Um dennoch ein Anlegen des Gurtes zu erzwingen, werden häufig Gurtkontaktschalter verwendet, die einen Betrieb der mobilen Arbeitsmaschine nur bei in das Gurtschloss eingestecktem Gurtklipp erlauben. Diese Sicherungsmaßnahme kann jedoch beispielsweise dadurch umgangen werden, dass der Sicherheitsgurt hinter der Rückenlehne des Fahrersitzes vorbeigeführt wird, wodurch der Fahrer trotz Betätigung des Gurtkontaktschalters die mobile Arbeitsmaschine ungesichert betreiben kann.

Der Erfindung liegt daher die Aufgabe zugrunde, ein Rückhaltesystem für eine mobile Arbeitsmaschine, insbesondere ein Flurförderzeug, mit einem Fahrersitz und einem Rückhaltegurt zur Verfügung zu stellen, das dem Fahrer einfaches und bequemes Einund Aussteigen gestattet und gleichzeitig sicherstellt, dass der Gurt ordnungsgemäß benutzt wird.

Diese Aufgabe wird erfindungsgemäß durch ein Rückhaltesystem gemäß Anspruch 1 gelöst, Dadurch wird der Einstieg des Fahrers in das Rückhaltesystem erleichtert, da der Rückhaltegurt von der Verbindung so gehalten wird, dass er beim Einsteigen schon halb um den Fahrer gelegt ist und der Gurtklipp nur noch auf einem kurzen Weg zum Gurtschloss geführt werden muss. Zudem ist der Gurt so vor dem Fahrer angeordnet, dass er diesen schließen muss, um die Bedienelemente der mobilen Arbeitsmaschine problemlos betätigen zu können.

Besonders vorteilhaft ist es, wenn die mechanische Verbindung aus einem Seil oder einem Gurt besteht, da damit eine flexible Verbindung besteht, die beim Ein- und Aussteigen weniger behindert als starre Verbindungen.

Vorteilhafterweise wird ein Mittel zur federnden Straffung des die mechanische Verbindung bildenden Seils oder Gurts vorhanden sein, damit auch bei unterschiedlich eingestellten Rückhaltegurtlängen ein einfacher Ein- und Ausstieg gewährleistet ist.

Es ist zweckmäßig, ein Mittel zum Aufrollen des die mechanische Verbindung bildenden Seils oder Gurts vorzusehen, um ein loses Durchhängen, das den Einstieg erschwert, zu vermeiden.

Indem der Befestigungspunkt der mechanischen Verbindung an einem vor dem Fahrersitz angeordneten Bauteil höhenverstellbar ist, wird eine leichte Erreichbarkeit des Gurtklipps für den Fahrer bei gleichzeitig einfachem Ein- und Ausstieg gewährleistet.

Vorteilhafterweise ist ein Mittel zur Begrenzung des Aufrollweges des die mechanische Verbindung bildenden Seils oder Gurts sowie des Aufrollweges des Rückhaltegurts vorhanden. Dadurch wird der Gurtklipp in einem für den Zugriff des Fahrers günstigen Bereich positioniert.

Es ist von besonderem Vorteil, wenn die erfindungsgemäße mechanische Verbindung derart ausgeführt ist, dass diese bei vorhandenen mobilen Arbeitsmaschinen nachrüstbar ist, da damit auch ältere Geräte auf den neuesten Sicherheitsstandard gebracht weden können.

Besonders vorteilhaft ist es, wenn ein Mittel zum Erkennen des Schließzustandes des Rückhaltegurts vorhanden ist, da so ein vorschriftswidrig nicht geschlossener Gurt erkannt werden kann.

Ebenfalls von besonderem Vorteil ist, wenn das Rückhaltesystem über eine Signalleitung derart mit der Steuerung der mobilen Arbeitsmaschine in Wirkverbindung steht, dass die Maschine nur bei geschlossenem Rückhaltegurt betreibbar ist, da damit eine versehentliche oder absichtliche Benutzung der Arbeitsmaschine bei nicht ordnungsgemäß geschlossenem Gurt verhindert wird. Da die Arbeitsmaschine nur bei geschlossenem Gurt in Betrieb genommen werden kann, ist sichergestellt, dass der Benutzer beim Betrieb der Maschine ordnungsgemäß gesichert und somit bei einem möglichen Unfall der Arbeitsmaschine geschützt ist.

Weitere Vorteile und Einzelheiten der Erfindung werden anhand des in den schematischen Figuren dargestellten Ausführungsbeispiels näher erläutert. Dabei zeigt
- Figur 1: einen Gabelstapler mit einer erfindungsgemäßen mechanischen Verbindung zwischen vorderem Fahrerschutzdachholm und geöffnetem Rückhaltegurt,
- Figur 2: einen Gabelstapler mit einer erfindungsgemäßen mechanischen Verbindung zwischen vorderem Fahrerschutzdachholm und geöffnetem Rückhaltegurt in der Seitenansicht,
- Figur 3: einen Gabelstapler mit einer erfindungsgemäßen mechanischen Verbindung zwischen vorderem Fahrerschutzdachholm und geschlossenem Rückhaltegurt,

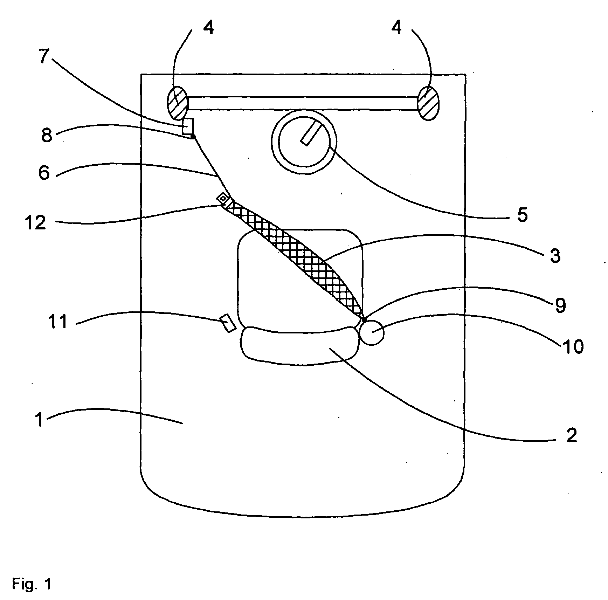

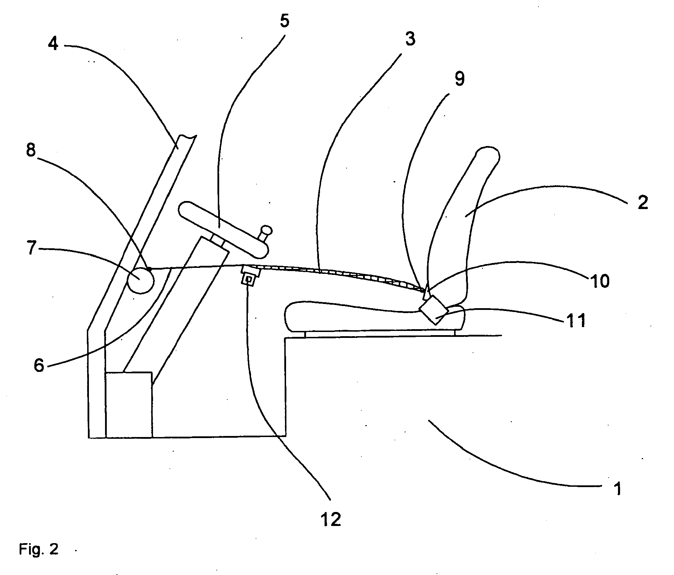

Figur 1 zeigt als Ausführungsbeispiel für eine mobile Arbeitsmaschine einen Gabelstapler 1 in der Draufsicht. Selbstverständlich können auch andere mobile Arbeitsmaschinen, wie beispielsweise Schlepper oder mobile Kräne, mit einer erfindungsgemäßen Vorrichtung ausgestattet werden. Aus Gründen der Übersichtlichkeit sind nur die vorderen Holme 4 des Fahrerschutzdachs dargestellt, während das eigentliche Dach und die dazugehörigen hinteren Holme nicht gezeigt sind. Der Gabelstapler 1 ist mit einem erfindungsgemäßen Rückhaltesystem ausgestattet, das im gezeigten Ausführungsbeispiel aus einem mit einer Gurtrolle 10 am Fahrersitz 2 befestigten Rückhaltegurt 3 besteht, der über eine mechanische Verbindung, hier in Gestalt eines Seils 6 mit einer Aufrollvorrichtung 7, beispielsweise einer vorgespannten Seilrolle, verbunden ist. Die Aufrollvorrichtung 7 ist im Ausführungsbeispiel am vorderen Fahrerschutzdachholm 4 befestigt, es ist jedoch auch eine Befestigung an anderen vor dem Fahrersitz angeordneten Bauteilen möglich. Diese können eigens zu diesem Zweck am Flurförderzeug angebracht sein oder bereits andere Funktionen erfüllen. Der Weg des Seils 6 ist durch die Stoppvorrichtung 8 begrenzt, der des Gurtes 3 durch die Stoppvorrichtung 9. Diese Anordnung ist in Fig. 2 in einer Seitenansicht gezeigt. Durch Einführen des Gurtklipps 12 in das Gurtschloss 11 wird der Rückhaltegurt geschlossen und es ergibt sich der in Fig. 3 gezeigte Zustand.

Die gezeigte Ausführung mit einem Beckengurt 3 ist für mobile Arbeitsmaschinen aufgrund der niedrigen Fahrgeschwindigkeit typisch, es kann jedoch auch ein anderes Gurtsystem, beispielsweise ein Dreipunktgurt, verwendet werden. Ebenso kann statt des Seils 6 auch eine andere flexible Verbindung gewählt werden, beispielsweise ein Gurt oder Band. Um das Schließen des Gurtes 3 zu ermöglichen, ist aufgrund des unterschiedlichen Abstandes des Gurtklipps 12 zum vorderen Holm 4 im offenen und im geschlossenen Zustand die Verbindung 6 so ausgeführt, dass sie in ihrer Länge variabel ist.

Eine Verstellung der Länge der mechanischen Verbindung 6 von Hand mit nachfolgender Arretierung, beispielsweise durch eine am Fahrerschutzdachholm 4 angebrachte Klemmvorrichtung, ist prinzipiell möglich, jedoch ist eine automatische Längenverstellung aufgrund der einfacheren Bedienung vorzuziehen. Dazu kann die Verbindung auch in sich elastisch sein, beispielsweise durch eingewebte Gummifäden.

Besteigt der Fahrer den Fahrersitz 2, so wird er schon beinahe vom Gurt 3 umschlossen und muss den Gurtklipp 12 nur noch einen kurzen Weg zum Gurtschloss 11 führen. Er wird dies insbesondere auch deshalb tun, weil bei geöffnetem Gurt 3 der Gurt 3 und das Seil 6 die Betätigung der Bedienelemente, wie beispielsweise des Lenkrades 5, behindern können. In geschlossener Stellung hingegen besteht für den Fahrer hinsichtlich Bedienung und Sichtverhältnissen kein Unterschied zu einem Gurtsystem nach dem Stand der Technik.

Um dem Bediener maximalen Komfort und eine optimale Einstellung des Gurts 3 zu gewährleisten, wird dieser vorzugsweise so ausgeführt sein, dass er sich in geöffnetem Zustand automatisch auf die Gurtrolle 10 aufrollt. Um zu verhindern, dass dies vollständig geschieht, wodurch für den Bediener die Benutzung erschwert würde, ist eine Stoppvorrichtung 9 vorgesehen. Diese kann entweder, wie in der gezeigten Ausführung, auf dem Gurt 3 selbst angeordnet, aber selbstverständlich auch beispielsweise im Mechanismus der Gurtrolle 10 integriert sein. Umgekehrt kann ein zu weites Einrollen des Seils 6 und damit ein zu weites Ausrollen des Gurts 3 durch die Aufrollvorrichtung 7 ebenfalls die Handhabung erschweren, da der Bediener sich, um den Gurtklipp 12 zu erreichen, weit nach vorne beugen müsste. Um dies zu vermeiden, ist eine Stoppvorrichtung 8 für die mechanische Verbindung 6 vorzusehen. Auch diese kann wieder, wie bei der Stoppvorrichtung 9 als Stopper 8 auf dem Seil 6 oder als Bestandteil der Aufrollvorrichtung 7 ausgeführt sein.

Sollte der Gurt 3 nicht, wie im gezeigten Ausführungsbeispiel, als Automatikgurt ausgebildet sein, so ist eine federnde Straffung des Gurtes 3 in geöffnetem Zustand besonders hilfreich, da der Gurt 3 so nicht durchhängt, sondern in einer Stellung gehalten wird, die einen bequemen Einstieg ermöglicht. Dies kann über eine Aufrollvorrichtung 7 oder durch Verwendung eines elastischen Verbindungselements 6, beispielsweise eines Seils mit eingewebten Gummifäden, realisiert werden.

Ist der Fahrersitz 2 höhenverstellbar, so sollte auch der Befestigungspunkt 13 der mechanischen Verbindung 6 in seiner Höhe verstellbar sein, um ein bequemes Einund Aussteigen zu ermöglichen. Diese Höhenverstellung kann durch eine der für solche Anwendungen übliche Technik realisiert werden, wie beispielsweise die Führung des Befestigungspunktes in einer Schiene mit Rastmarken oder eine einfach lösbare Verschraubung.

Um sicherzustellen, dass der Bediener den Gurt 3 tatsächlich anlegt, kann ein Mittel zum Erkennen des Schließzustandes des Gurtes 3 vorgesehen werden. Dieses kann beispielsweise in einem Schalter im Gurtschloss 11 bestehen, aber auch andere Lösungen sind möglich. Der Fahrer kann dann bei nicht angelegtem Gurt 3 beispielsweise durch ein Warnsignal auf diesen Umstand hingeweisen werden.

Noch größere Sicherheit wird erzielt, wenn die Rückhaltevorrichtung über eine Signalleitung so mit der Steuerung des Gabelstaplers 1 in Wirkverbindung steht, dass dessen Betrieb nur bei geschlossenem Gurt 3 möglich ist. Bei bisherigen Gurtanordnungen konnten solche Schaltungen dadurch umgangen werden, dass der Fahrer den Rückhaltegurt permanent geschlossen lässt und diesen dabei beispielsweise hinter der Rückenlehne des Sitzes vorbeiführt. Dies wird nun durch die mechanische Verbindung 6 zum vor dem Fahrersitz angebrachten Teil 4 des Fahrerschutzdachs verhindert. Durch diese Maßnahme sowie das erleichterte Anlegen des Gurtes 3 wird somit ein erheblicher Sicherheitsgewinn erzielt.

## Patentansprüche

1. Rückhaltesystem für eine mobile Arbeitsmaschine (1), insbesondere für ein Flurförderzeug, mit einem Fahrersitz (2) und einem Rückhaltegurt (3) mit einem ersten Ende an dem Fahrersitz seitlich befestigt und einem zweiten Ende mit einem Gurtklipp, wobei mindestens eine längenvariable mechanische Verbindung (6) zwischen einem vor dem Fahrersitz (2) angeordneten Bauteil (4) und dem zweiten Ende des Rückhaltegurts (3) besteht,
**dadurch gekennzeichnet,**
**dass** die längenvariable mechanische Verbindung (6) den Rückhaltegurt in Richtung des vor dem Fahrersitz (2) angeordneten Bauteils (4) und dabei über den Fahrersitz zu dessen anderen Seite hin zieht, von welcher Seite aus der Fahrersitz zugänglich ist.

2. Rückhaltesystem nach Anspruch 1, **dadurch gekennzeichnet, dass** die mechanische Verbindung (6) aus mindestens einem Seil oder Gurt besteht.

3. Rückhaltesystem nach Anspruch 1 oder 2, **dadurch gekennzeichnet, dass** ein Mittel (7) zur federnden Straffung der mechanischen Verbindung (6) vorhanden ist, so dass die Verbindung elastisch längsdehnbar ist.

4. Rückhaltesystem nach einem der Ansprüche 1 bis 3, **dadurch gekennzeichnet, dass** eine Mittel (7) zum Aufrollen des die mechanische Verbindung (6) bildenden Seils oder Gurts vorhanden ist.

5. Rückhaltesystem nach einem der Ansprüche 1 bis 4, **dadurch gekennzeichnet, dass** der Befestigungspunkt der mechanischen Verbindung (6) an dem vor dem Fahrersitz (2) angeordneten Bauteil (4) höhenverstellbar ist.

6. Rückhaltesystem nach einem der Ansprüche 1 bis 5, **dadurch gekennzeichnet, dass** mindestens ein Mittel (8) zur Begrenzung des Aufrollweges des die mechanische Verbindung (6) bildenden Seils oder Gurts und/oder mindestens ein Mittel (9) zur Begrenzung des Aufrollweges des Rückhaltegurts (3) vorhanden ist.

7. Rückhaltesystem nach einem der Ansprüche 1 bis 6, **dadurch gekennzeichnet, dass** die längenvariable mechanische Verbindung (6) derart ausgeführt ist, dass sie bei vorhandenen mobilen Arbeitsmaschinen (1) nachrüstbar ist.

8. Rückhaltesystem nach einem der Ansprüche 1 bis 7, **dadurch gekennzeichnet, dass** ein Mittel zum Erkennen des Schließzustandes des Rückhaltegurts (3) vorhanden ist.

9. Rückhaltesystem nach einem der Ansprüche 1 bis 8, **dadurch gekennzeichnet, dass** das Rückhaltesystem mittels einer Signalleitung mit der Steuerung der mobilen Arbeitsmaschine (1) derart in Wirkverbindung steht, dass die mobile Arbeitsmaschine (1) nur bei geschlossenem Rückhaltegurt (3) betreibbar ist.

## Claims

1. Restraint system for a mobile working machine (1), in particular for an industrial truck, with a driver's seat (2) and a restraining belt (3) with a first end on the driver's seat, fastened laterally, and a second end with a belt clip, there being at least one variable-length mechanical connection (6) between a component (4) arranged in front of the driver's seat (2) and the second end of the restraining belt (3), **characterized in that** the variable-length mechanical connection (6) draws the restraining belt in the direction of the component (4) arranged in front of the driver's seat (2) and, in the process, over the driver's seat towards the other side thereof, from which side the driver's seat is accessible.

2. Restraint system according to Claim 1, **characterized in that** the mechanical connection (6) comprises at least one rope or belt.

3. Restraint system according to Claim 1 or 2, **characterized in that** a means (7) for tightening the mechanical connection (6) in a sprung manner is provided, with the result that the connection can be extended in length elastically.

4. Restraint system according to one of Claims 1 to 3, **characterized in that** a means (7) for rolling up the rope or belt forming the mechanical connection (6) is provided.

5. Restraint system according to one of Claims 1 to 4, **characterized in that** the fastening point for the mechanical connection (6) on the component (4) arranged in front of the driver's seat (2) is vertically adjustable.

6. Restraint system according to one of Claims 1 to 5, **characterized in that** at least one means (8) for limiting the roll-up travel of the rope or belt forming the mechanical connection (6) and/or at least one means (9) for limiting the roll-up travel of the restraining belt (3) is/are provided.

7. Restraint system according to one of Claims 1 to 6, **characterized in that** the variable-length mechanical connection (6) is designed in such a way that it can be retrofitted in existing mobile working machines (1).

8. Restraint system according to one of Claims 1 to 7, **characterized in that** a means for identifying the locked state of the restraining belt (3) is provided.

9. Restraint system according to one of Claims 1 to 8, **characterized in that** the restraint system is operatively connected to the controller of the mobile working machine (1) by means of a signal line in such a way that the mobile working machine (1) can be operated only when the restraining belt (3) is locked.

## Revendications

1. Système de retenue pour une machine de travail mobile (1), en particulier pour un chariot de manutention, avec un siège de conducteur (2) et une ceinture de retenue (3) avec une première extrémité fixée latéralement au siège du conducteur et une deuxième extrémité avec une boucle de ceinture, au moins une connexion mécanique de longueur variable (6) existant entre un composant (4) disposé devant le siège du conducteur (2) et la deuxième extrémité de la ceinture de retenue (3),
**caractérisé en ce que**
la connexion mécanique de longueur variable (6) tire la ceinture de retenue dans la direction du composant (4) disposé devant le siège du conducteur (2) et en l'occurrence la tire pardessus le siège du conducteur vers son autre côté, depuis lequel le siège du conducteur est accessible.

2. Système de retenue selon la revendication 1, **caractérisé en ce que** la connexion mécanique (6) se compose au moins d'un câble ou d'une ceinture.

3. Système de retenue selon la revendication 1 ou 2, **caractérisé en ce qu'**un moyen (7) pour tendre de manière élastique la connexion mécanique (6) est prévu de telle sorte que la connexion puisse être étirée élastiquement en longueur.

4. Système de retenue selon l'une quelconque des revendications 1 à 3, **caractérisé en ce qu'**il est prévu un moyen (7) pour enrouler le câble ou la ceinture formant la connexion mécanique (6).

5. Système de retenue selon l'une quelconque des revendications 1 à 4, **caractérisé en ce que** le point de fixation de la connexion mécanique (6) peut être réglé en hauteur sur le composant (4) disposé devant le siège du conducteur (2).

6. Système de retenue selon l'une quelconque des revendications 1 à 5, **caractérisé en ce qu'**au moins un moyen (8) est prévu pour limiter la course d'enroulement du câble ou de la ceinture formant la connexion mécanique (6) et/ou au moins un moyen (9) est prévu pour limiter la course d'enroulement de la ceinture de retenue (3).

7. Système de retenue selon l'une quelconque des revendications 1 à 6, **caractérisé en ce que** la connexion mécanique de longueur variable (6) est réalisée de telle sorte qu'elle puisse être équipée en rattrapage sur des machines de travail mobiles existantes (1).

8. Système de retenue selon l'une quelconque des revendications 1 à 7, **caractérisé en ce qu'**un moyen pour reconnaître l'état de fermeture de la ceinture de retenue (3) est prévu.

9. Système de retenue selon l'une quelconque des revendications 1 à 8, **caractérisé en ce que** le système de retenue est en liaison coopérante au moyen d'une conduite de signal avec la commande de la machine de travail mobile (1), de telle sorte que la machine de travail mobile (1) ne puisse fonctionner que lorsque la ceinture de retenue (3) est bouclée.
